# EUROPÄISCHE PATENTSCHRIFT

(11) **EP 3 031 328 B1**
(45) Veröffentlichungstag und Bekanntmachung des Hinweises auf die Patenterteilung: **17.10.2018**
(21) Anmeldenummer: 15003503.8
(22) Anmeldetag: 08.12.2015
(51) Int. Cl.: A21B 1/50, A21B 3/07, F24C 15/16

(54) **HORDENGESTELL FÜR EINEN, EINE BACKKAMMER AUFWEISENDEN BACKOFEN**
TRAY RACK FOR A BAKING OVEN COMPRISING A BAKING CHAMBER
SUPPORT POUR CLAIES POUR UN FOUR DE CUISSON PRESENTANT UNE CHAMBRE DE CUISSON

(30) Priorität: 08.12.2014 DE 202014009645 U
(43) Veröffentlichungstag der Anmeldung: 15.06.2016
(73) Patentinhaber: Stadler, Marion, 85296 Rohrbach (DE)
(72) Erfinder: Stadler, Marion, 85296 Rohrbach (DE)
(74) Vertreter: Liebl, Thomas

(56) Entgegenhaltungen:
- EP-A1- 0 846 419
- EP-A2- 1 106 932
- WO-A1-2011/107305
- DE-U1-202005 008 194
- FR-A1- 2 682 560
- GB-A- 1 512 646
- US-A- 4 004 819
- US-A- 4 757 184
- US-A1- 2003 196 975

## Beschreibung

Die Erfindung betrifft ein verlagerbares und ein verfahrbares Hordengestell für einen, eine Backkammer aufweisenden Backofen, vor allem für sogenannte Ladenbacköfen, insbesondere zum Backen von Teigwaren bzw. Teiglingen.

Derartige Hordengestelle werden vorzugsweise in Backöfen verwendet, die direkt in den Verkaufsstellen für die Backwaren aufgestellt sind, zum Beispiel in Supermärkten, und in denen die dort angelieferten Teiglinge direkt vor Ort frisch gebacken werden können.

Zum Beschicken von Backöfen werden regelmäßig stabile und massiv aus Edelstahl hergestellt Hordengestelle verwendet, die mit etagenartig übereinander angeordneten Backblechen bestückt werden können, auf denen die zu backenden Teiglinge angeordnet sind. Konkret weisen derartige Hordengestelle einen massiven Kastenaufbau auf, bei dem an der Ober- oder an der Unterseite zwei voneinander in Verfahrrichtung beabstandete massive Radachsen angeordnet sind, an denen endseitig jeweils massive Stahlräder angeordnet sind. An den massiven, quer zur Einschubrichtung gegenüberliegenden Seitenwänden des Hordengestells sind massive vollflächige Stahlblechauflager ausgebildet, auf denen die Backbleche im eingesetzten Zustand aufliegen und dementsprechend abgestützt sind.

Nach dem Auflegen der zu backenden Teiglinge auf die Backbleche werden die Hordengestelle vom Bedienpersonal mit einer Vielzahl von Backblechen bestückt und anschließend das so mit den Backblechen bestückte massive Hordengestell in die Backkammer des zugeordneten Backofens verbracht und mittels der Räder in die gewünschte Backposition in der Backkammer verfahren. Die massiven Hordengestelle werden dabei regelmäßig, insbesondere in Verbindung mit einem mit mehreren Hordengestellen beschickbaren Backofen, auf einem Hordengestell-Transportwagen angeordnet und mittels diesem zum Backofen oder zu den Backöfen verfahren. Dort werden die massiven Hordengestelle dann vom Hordengestell-Transportwagen aus in die jeweils zugeordnete Backkammer eingeschoben bzw. eingefahren.

Der massive Stahlaufbau des Hordengestells bewirkt zwar, dass das Hordengestell lediglich einem geringen Verschleiß unterliegt und trotz seines dauerhaften Einsatzes eine hohe Lebensdauer aufweist. Ein derartiger massiver Aufbau des Hordengestells hat jedoch den erheblichen Nachteil, dass dieser im Backofen mit erhitzt wird und somit eine große Aufheizmasse darstellt, was sich negativ auf die zur Aufheizung des Backofens benötigte Energie auswirkt. Insbesondere bei Discountern mit einer Vielzahl von in den Verkaufsfilialen betriebenen Ladenbacköfen, in denen über den Tag gesehen mehrmals gebacken wird, ergeben sich hierdurch enorme Aufheiz- und damit Energiekosten.

Die GB 1,512,646 A offenbart ein Hordengestell, das mittels Rädern verfahrbar ausgebildet ist und dessen gegenüberliegende Rahmenseiten durch Verbindungsstreben verbunden sind. Die Räder sind hier konkret durch massive Laufrollen gebildet, die schwenkbar an Vertikalstreben gelagert sind, die Bestandteil der vorderen und hinteren Rahmen bilden. Das Hordengestell ist insgesamt aus einem Stahlmaterial hergestellt, so dass sich nach wie vor ein relativ massiver Aufbau des Hordengestells ergibt und das Hordengestell auch nach wie vor noch eine relativ große Aufheizmasse besitzt, was sich negativ auf die zur Aufheizung des Backofens benötigte Energie auswirkt.

Die US 4,757,184 A betrifft ebenfalls ein massives Hordengestell, bei dem die Räder jeweils an einem nach unten frei abragenden Ende einer massiv ausgeführten Vertikalstrebe angeordnet sind. Auch wenn hier erwähnt ist, dass die Räder aus einem Plastikmaterial hergestellt sind, bedarf es hier einer aufwändigen Schwenklagerung mit einem schweren, die Räder jeweils seitlich umgreifenden Beschlag, der die Achsen aufweist.

Weiter zeigt auch die DE 20 2005 008 194 U1 einen Aufbau, bei dem massive Räder bzw. Rollen an den freien unteren Enden der massiven Vertikalstreben des Gestells angeordnet werden. Hierzu werden Lagerzapfen der Rollen in untere Öffnungen der vertikal ausgerichteten Vertikalstreben eingesetzt.

Auch die US 2003/0196975 A1 offenbart einen massiven Aufbau mit einem Grundrahmen, der durch zwei massive Trägerelemente gebildet ist, an denen massive Nachlaufräder angeordnet sind. Die Trägerelemente sind mittels eines ebenfalls massiven Querträgers verbunden, die wiederum mittels zusätzlicher Versteifungselemente versteift sind. Die einzelnen Trägerelemente des Grundrahmens sind miteinander verschweißt, so dass sich dadurch ein insgesamt extrem gewichtsungünstiger und schwerer Aufbau mit einer großen thermischen Masse ergibt. Auf dem Grundrahmen werden Stehermontiert, an denen dann wiederum winklig ausgebildete Backblechhalter angebunden sind. Diese Backblechhalter bilden zusammen mit den Stehern Seitenrahmen aus, die bevorzugt aus einem Stahlmaterial gebildet sind, jedoch alternativ auch aus einem Kunststoffmaterial gebildet sein können. Der Grundrahmen selbst soll dagegen explizit aus einem demgegenüber wesentlich stabileren Material ausgebildet sein.

Die EP 0 846 419 A1 offenbart eine Plastikbackwanne, deren Ziel es ist, das Anhaften von Rückständen an den Wänden der Backwanne zu vermeiden.

Die EP 1 106 932 A2 betrifft eine Tür für einen Garofen mit Trägerelementen aus Kunststoff, die eine einfache Montierbarkeit der Tür garantieren sollen. Die US 4,004,819 A betrifft ein Hordengestell, bei dem ein relativ materialaufwändiger Aufbau vorgesehen ist, der aufgrund der Vielzahl der verwendeten Bauteile bereits von vorne herein ein hohes Gewicht aufweist. Insbesondere ist auch hier wieder ein massiver Grundrahmen mit Radachsen und schweren Rädern vorgesehen.

Die WO 2011/107305 A1 offenbart einen Backofen mit einem zugeordneten Gestell, bei dem Relativverlagerungen möglich sind.

Die FR 2 682 560 offenbart ein Hordengestell wobei Räder an unteren Verbindungsstreben angeordnet sind.

Demgegenüber ist es Aufgabe der vorliegenden Erfindung, ein verlagerbares und verfahrbares Hordengestell für einen, eine Backkammer aufweisenden Backofen zur Verfügung zu stellen, der einfach handhabbar ist und der es ermöglicht, die Energiekosten in Verbindung mit der Aufheizung des Backofens deutlich zu senken.

Diese Aufgabe wird gelöst mit den kennzeichnenden Merkmalen des unabhängigen Anspruchs 1. Vorteilhafte Ausgestaltungen hierzu sind Gegenstand der darauf rückbezogenen Unteransprüche.

Gemäß Anspruch 1 wird ein verlagerbares und ein verfahrbares Hordengestell für einen, eine Backkammer aufweisenden Backofen vorgeschlagen, bei dem wenigstens die Räder des Hordengestells aus einem hochtemperaturbeständigen Kunststoffmaterial hergestellt sind. Zusätzlich dazu ist vorgesehen, dass das Hordengestell einen, in Einschubrichtung gesehen, vorderen Rahmen, insbesondere einen vorderen Rechteckrahmen, sowie einen beabstandet dahinter liegenden hinteren Rahmen, insbesondere einen hinteren Rechteckrahmen, aufweist, die an ihren, quer zur Einschubrichtung liegenden, gegenüberliegenden Rahmenseiten jeweils mittels mehrerer in Hochachsenrichtung gesehen etagenartig übereinander liegender, dünn bzw. stabartig ausgebildeter und ein Hordengestell-Seitenteil ausbildender, Verbindungsstreben verbunden sind. Mit einem derartigen Rahmenaufbau lässt sich eine besonders gewichtsgünstige Hordengestellkonstruktion und damit eine Reduzierung der aufzuheizenden thermischen Masse realisieren, was die nachfolgenden Ausführungen noch im Detail zeigen werden.

Ein hochtemperaturbeständiges Kunststoffmaterial ermöglicht einen gegenüber dem massiven Stahl-Hordengestell wesentlich gewichtsgünstigeren und damit leichteren Aufbau. Durch den Einsatz von Bestandteilen bzw. Bauteilen aus einem hochtemperaturbeständigen Kunststoffmaterial kann die im Backofen aufzuheizende thermische Masse des Hordengestells wesentlich reduziert werden und können somit die Energie- bzw. Aufheizkosten bei den Betreibern der Backöfen erheblich gesenkt werden, insbesondere um bis zu 50% gesenkt werden, was insbesondere bei Discountern, die eine Vielzahl derartiger Ladenbacköfen betreiben, ein enormes Einsparpotential bedeutet.

Es versteht sich, dass der wenigstens eine Bestandteil oder das wenigstens eine Bauteil des Hordengestells, das aus einem hochtemperaturbeständigen Kunststoffmaterial hergestellt ist, ein wesentlicher Teil des Hordengestells sein muss, der zum Beispiel ein bestimmtes Gewicht und/oder eine bestimmte Fläche und/oder eine bestimmte Größenordnung aufweist, die bei einem vergleichbaren identischen Aufbau des jeweiligen Bestandteils oder Bauteils aus einem Stahlmaterial eine wesentliche Gewichtsersparnis bringt, insbesondere eine Gewichtsersparnis von wenigstens 40 bis 50% mit sich bringt. Das erfindungsgemäße Hordengestell kann z.B. bei einer Höhe von ca. 420mm, einer Tiefe (in Einschubrichtung gesehen) von ca. 425mm und einer Breite von ca. 630mm lediglich ein Gewicht von ca. 2,5kg bis 3,0kg aufweisen, während vergleichbare Hordengestelle mit ähnlichen Abmessungen ein Gewicht von über 6,0kg bis 7,0kg und mehr aufweisen, was deutlich den Vorteil der erfindungsgemäßen Lösung aufzeigt.

Wie die vorstehenden Ausführungen zeigen, lässt sich eine vorteilhafte Reduzierung der thermischen Masse mit dem damit verbundenen Einsparpotential erzielen.

Die Begrifflichkeit "hochtemperaturbeständig" ist hier zudem so zu verstehen, dass damit die in einem Backofen für Teiglinge vorherrschenden Temperaturen gemeint sind, das heißt dass die Bestandteile oder Bauteile des Hordengestells, die aus einem hochtemperaturbeständigen Kunststoffmaterial hergestellt sind, bei diesen üblichen Backofentemperaturen (zum Beispiel 250°C) zum Backen von Teiglingen im Wesentlichen formbeständig sind und keine Beschädigung erfahren dürfen.

Hierfür eignen sich insbesondere hochtemperaturbeständige thermoplastische Kunststoffe, und hier insbesondere ein Polyaryletherketon (PAEK), wobei von den Polyaryletherketonen insbesonders das Polyetheretherketon (PEEK) bevorzugt ist. Derartige Polyaryletherketone sind deshalb bevorzugt, weil die gute Festigkeit der teilkristallinen aromatischen Polymere auch bei höheren Temperaturen erhalten bleibt. Zudem zeigen PEAK-Materialien eine sehr gute Schlagzähigkeit bei tiefen Temperaturen, eine hohe mechanische Wechselfestigkeit, eine sehr geringe Kriechneigung sowie ein gutes Gleit- und Verschleißverhalten. Auch die Chemikalienbeständigkeit ist sehr gut. Deshalb eignen sich die Polyaryletherketone, und hier insbesondere die Polyetheretherketone, hervorragend für die anspruchsvollen Anwendungen in Verbindung mit Backaufgaben in Backöfen.

In einer nicht beanspruchten Ausführungsform könnte das Hordengestell ein zum Beispiel über Gleitlager in eine Backkammer des Backofens einschiebbares Hordengestell sein. Erfindungsgemäß ist das Hordengestell jedoch als ein mittels Rädern verfahrbares Hordengestell ausgebildet.

Erfindungsgemäß ist auf jeder der gegenüberliegenden Rahmenseiten an einer in Hochachsenrichtung unteren Verbindungsstrebe, höchst bevorzugt an einer in Hochachsenrichtung untersten Verbindungsstrebe, jeweils wenigstens ein Rad angeordnet sein. Bevorzugt sind mehrere, insbesondere zwei in Einschubrichtung voneinander beabstandete Räder auf jeder Rahmenseite vorgesehen bzw. angeordnet, mittels denen ein sicheres, abgestütztes Verfahren des Hordengestells möglich ist. In Verbindung mit derartigen Verbindungsstreben ist es insbesondere vorteilhaft, wenn dort die Räder lösbar festgelegt sind, insbesondere mittels einer Rast- und/oder Klippverbindung lösbar an den Verbindungsstreben gehaltert sind, wenngleich selbstverständlich auch andere Festlegungsarten möglich sind. Hier wird bereits ein wesentlicher Vorteil der erfindungsgemäßen Lösung sichtbar. Die Verbindungsstreben selbst, die stabartig ausgebildet sind, bewirken neben einer vorteilhaften Versteifung des Rahmenaufbaus auch eine besonders leichte Bauweise des Hordengestells, wobei an den Verbindungsstreben dann in einer Doppelfunktion gleichzeitig auch die Räder festgelegt werden können. Die Räder selbst sind dabei aus dem hochtemperaturbeständigen Kunststoffmaterial hergestellt und damit äußerst gewichtsgünstig hergestellt. Es können daher in Verbindung mit einem derartigen leichten Rahmenaufbau eines Hordengestells massive und schwere Radachsen vermieden werden. Sollte es zum Beispiel in Verbindung mit den aus einem hochtemperaturbeständigen Kunststoffmaterial hergestellten Rädern zu einem Radverschleiß kommen, können diese aufgrund der einfachen lösbaren Festlegung auch wiederum einfachst und schnell auf kostengünstigste Weise ausgetauscht werden.

Zudem kann gemäß einer besonders bevorzugten Ausgestaltung wenigstens ein Teil der auf den gegenüberliegenden Rahmenseiten liegenden Verbindungsstreben gleichzeitig auch ein Auflager für ein Backblech ausbilden, wobei bevorzugt vorgesehen ist, dass pro Rahmenseite mehrere in Hochachsenrichtung voneinander beabstandete Auflager vorgesehen sind, mittels denen mehrere Backbleche in Hochachsenrichtung beabstandet voneinander etagenartig am Hordengestell lagerbar sind. Diese Verbindungsstreben bilden somit ebenfalls in einer vorteilhaften Doppelfunktion gleichzeitig auch eine Versteifung des Rahmenaufbaus des Hordengestells insgesamt aus.

Die Verbindungsstreben sind bevorzugt Bestandteil eines, vorzugsweise separat handhabbaren und/oder im montierten Zustand eine Hordengestellseite ausbildenden, Seitenteils des Hordengestells. Damit wird eine einfache und schnelle Montage des Hordengestells gewährleistet, das dann nur aus wenigen Bauteilen besteht. Besonders bevorzugt ist eine konkrete Ausführungsform, bei der quer zur Einschubrichtung gesehen auf gegenüberliegenden Hordengestellseiten liegende Seitenteile mittelbar und/oder unmittelbar mit den Rahmen, insbesondere den Rechteckrahmen, verbunden sind.

Um die Verbindungsstreben positionsgenau zu haltern, weist das Seitenteil wenigstens ein Positionier- und/oder Halteelement auf, mittels dem die Verbindungsstreben des Seitenteils in ihrer jeweiligen Position gehalten sind. In diesem Zusammenhang ist bevorzugt vorgesehen, dass das wenigstens eine Positionier- und/oder Halteelement stabförmig ausgebildet ist und/oder in Vertikalrichtung verläuft, höchst bevorzugt das Positionier- und/oder Halteelement durch ein einfaches und gewichtsgünstiges Stabelement gebildet ist.

Besonders bevorzugt ist hierbei ein konkreter Aufbau, bei dem die, die Auflager ausbildenden Verbindungsstreben durch (vorzugsweise dünne, z.B. stab- und/oder drahtartig ausgebildete) U-förmige Bügel gebildet sind, die mit ihrer U-Basis von der jeweiligen Rahmenseite weg nach innen zur Hordengestellmitte abragen und somit die Backblech-Auflager mit ihrer U-Basis ausbilden, während sie mit ihren Schenkeln, vorzugsweise mit ihren Schenkelenden, jeweils mittelbar und/oder unmittelbar an einer zugeordneten Vertikalstrebe des vorderen und hinteren Rahmens, insbesondere Rechteckrahmens, angebunden sind.

Die U-förmigen Bügel können mit ihren, einer Vertikalstrebe des hinteren Rechteckrahmens zugeordneten Schenkeln, vorzugsweise mit den freien Schenkelenden, an einem, ein Positionier- und/oder Halteelement ausbildenden, ersten Stabelement und mit ihren, eine Vertikalstrebe des vorderen Rahmens, insbesondere Rechteckrahmens, zugeordneten Schenkeln, vorzugsweise mit den freien Schenkelenden, an einem zweiten, ein Positionier- und/oder Halteelement ausbildenden, Stabelement angebunden sein. Gemäß einer ersten konkreten Ausgestaltung hierzu bilden die U-förmigen Bügel mitsamt dem ersten und zweiten Stabelement (ggf. können auch mehr als zwei Stabelemente vorhanden sein) bevorzugt ein (vorzugsweise separat handhabbares und/oder leichtes und/oder gitterförmiges) Bauteil aus, das mittels der Stabelemente dann mittelbar und/oder vorzugsweise unmittelbar an den Rahmen festlegbar ist, vorzugsweise an den jeweils zugeordneten Vertikalstreben der Rahmen, insbesondere Rechteckrahmen, einfachst und schnell festgelegt werden kann.

Gemäß einer hierzu alternativen Ausführungsform kann aber auch vorgesehen sein, dass das erste und zweite Stabelement an wenigstens einer, kein Auflager ausbildenden Verbindungsstrebe festgelegt ist, z.B. an in Vertikalrichtung beabstandeten und kein Auflager ausbildenden Verbindungsstreben festgelegt ist. Die wenigstens eine Verbindungsstrebe bildet in diesem Fall dann mitsamt dem ersten und zweiten Stabelement sowie den U-förmigen Bügeln ein, vorzugsweise separat handhabbares, Seitenteil aus, das mittels der wenigstens einen Verbindungsstrebe mittelbar und/oder vorzugsweise unmittelbar an den Rahmen festlegbar ist, vorzugsweise an den jeweils zugeordneten Vertikalstreben der Rahmen, insbesondere Rechteckrahmen, einfachst und schnell festlegbar ist
Besonders bevorzugt ist zudem eine Ausgestaltung, bei der zumindest die U-förmigen Bügel ausbildenden Verbindungsstreben der Verbindungsstreben einen zylindrischen oder runden Querschnitt aufweisen. Dies unterstützt zum einen das Gleitverhalten beim Einschieben der Backbleche bzw. verhindert zum anderen Verletzungen durch scharfkantige Bauteile.

Wie bereits zuvor ausgeführt, sind zumindest die Räder des Hordengestells aus dem hochtemperaturbeständigen Kunststoffmaterial hergestellt. Grundsätzlich können aber auch alternativ oder zusätzlich weitere Bestandteile des Hordengestells aus dem hochtemperaturbeständigen Kunststoffmaterial hergestellt sein, zum Beispiel die U-förmigen Bügel, gegebenenfalls mitsamt den zugeordneten Stabelementen, und/oder der vordere und hintere Rahmen bzw. Rechteckrahmen und/oder die keine Backblech-Auflager ausbildenden Verbindungsstreben. Aufgrund der erfindungsgemäßen, insgesamt äußerst gewichtsgünstigen Konstruktion können die U-förmigen Bügel, gegebenenfalls mitsamt den zugeordneten Stabelementen, unter Beibehaltung eines nach wie vor gewichtsgünstigen Aufbaus aber auch aus einem abriebfesten Stahlmaterial, insbesondere aus einem Stahldraht oder Stahlrohr, besonders bevorzugt aus einem Edelstahldraht- oder rohr, hergestellt sein. Durch die dünne drahtartige Ausgestaltung erhöhen derartige aus einem abriebfesten Stahlmaterial hergestellte U-förmigen Bügel das Gesamtgewicht nur unwesentlich.

Der vordere und hintere Rahmen, insbesondere Rechteckrahmen, und/oder diejenigen seitlichen Verbindungsstreben, die kein Backblech-Auflager ausbilden, sondern lediglich der Versteifung dienen, können für einen besonders gewichtsgünstigen Aufbau gegebenenfalls auch aus einem Leichtmetall, insbesondere aus Aluminium oder aus einer Aluminiumlegierung, hergestellt sein.

Eine weitere besonders gewichtsgünstige Bauweise ergibt sich auch dann, wenn der vordere und hintere Rahmen, insbesondere Rechteckrahmen, und/oder die Verbindungsstreben (zumindest die keine Backblech-Auflager ausbildenden Verbindungsstreben) durch ein Hohlprofil gebildet sind. Insbesondere in diesem Fall können die Rahmen bzw. die Verbindungsstreben gegebenenfalls auch aus einem Stahlmaterial, zum Beispiel einem Edelstahl, hergestellt sein. An dieser Stelle sei jedoch ausdrücklich erwähnt, dass es aufgrund der erfindungsgemäßen, insgesamt äußerst gewichtsgünstigen Konstruktion des Hordengestells, insbesondere in Verbindung mit dem Einsatz von Bauteilen (zum Beispiel die Räder) aus einem hochtemperaturbeständigen Kunststoffmaterial, sogar möglich ist, die Rahmen, insbesondere Rechteckrahmen, bzw. die Rahmen, insbesondere Rechteckrahmen, mitsamt den Verbindungsstreben aus einem Stahlmaterial, insbesondere aus einem Edelstahlmaterial, herzustellen und trotzdem eine deutliche Gewichtsersparnis gegenüber herkömmlichen massiven Stahl-Hordengestellen zu erreichen. Das heißt, dass die Rahmen, insbesondere Rechteckrahmen, bzw. Verbindungsstreben, auch unabhängig von der Ausgestaltung als Hohlprofil aus einem Stahlmaterial hergestellt sein können, weil die erfindungsgemäße Hordengestellkonstruktion bereits einen entsprechenden gewichtsgünstigen Aufbau erlaubt.

Es versteht sich weiter, dass die Verbindungsstreben und/oder die Rahmen, insbesondere Rechteckrahmen, grundsätzlich auch unterschiedlich gestaltet und/oder aus einem unterschiedlichen Material hergestellt sein könnten, auch wenn dies vorstehend und nachstehend nicht explizit erwähnt wird.

Gemäß einer weiteren besonders bevorzugten Ausführungsform kann an einem, in Einschubrichtung gesehen, vorderen Rahmen, insbesondere einem vorderen Rechteckrahmen, der im, in den Backofen eingesetzten Zustand des Hordengestells von der Backofenöffnung aus frei zugänglich ist, eine Anschlagstrebe vorgesehen sein. Diese Anschlagstrebe kann zum Beispiel in einem, bezogen auf die Querrichtung mittleren Bereich vorgesehen sein. Zudem ist diese Anschlagstrebe bevorzugt sowohl an der oberen als auch an der unteren Horizontalstrebe des vorderen Rahmens angebunden. Diese Anschlagstrebe dient zum einen als Anschlag für die in das Hordengestell eingeschobenen Backbleche, so dass diese von der, entgegengesetzt zur Einschubrichtung des Hordengestells ausgerichteten Backblech-Einschubrichtung her nicht aus dem Hordengestell ausgeschoben werden können. Zum anderen dient diese Anschlagstrebe vorteilhafterweise auch als Auszugshilfe aus dem Backofen.

Ferner beansprucht die Erfindung einen Backofen mit einer Backkammer sowie mit einem in die Backkammer einschiebbaren, insbesondere einfahrbaren, Hordengestell, wie es bereits zuvor ausführlich gewürdigt worden ist. Insofern ergeben sich hier die zuvor genannten Vorteile in identischer Weise.

Die Erfindung wird nachfolgend lediglich schematisch und beispielhaft anhand einer Zeichnung näher erläutert.

Es zeigen:
- Fig. 1: eine schematische und perspektivische Darstellung einer beispielhaften Ausführungsform eines erfindungsgemäßen Hordengestells; und
- Fig. 2: eine schematische, auseinandergezogene und ausschnittsweise Darstellung einer alternativen Ausführungsform des Hordengestells gemäß Fig. 1.

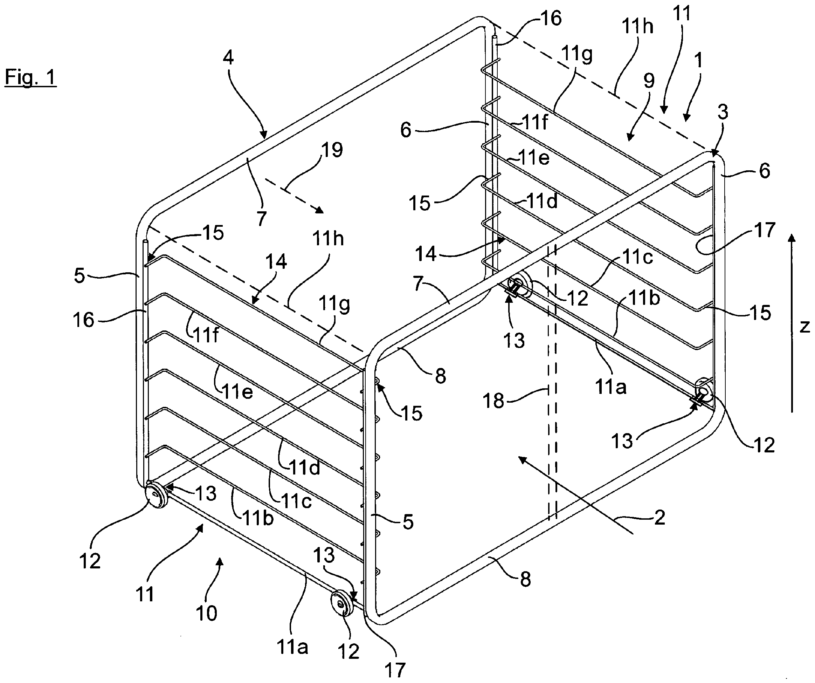

Fig. 1 zeigt schematisch und perspektivisch eine beispielhafte Ausführungsform eines erfindungsgemäßen Hordengestells 1. Dieses Hordengestell 1 weist einen, in Verfahr- bzw. Einschubrichtung 2 (in einen hier nicht gezeigten Backofen) gesehen, vorderen Rahmen bzw. Rechteckrahmen 3 sowie einen in Einschubrichtung 2 beabstandet dahinter liegenden hinteren Rahmen bzw. Rechteckrahmen 4 auf. Die beiden Rechteckrahmen 3, 4 weisen jeweils seitlich gegenüberliegende Vertikalstreben 5, 6 sowie in Hochachsenrichtung einander gegenüberliegende Horizontalstreben 7, 8 auf, wobei die Eck- bzw. Übergangsbereiche zwischen den Vertikalstreben 5, 6 und den Horizontalstreben 7, 8 hier lediglich beispielhaft verrundet mit einem definierten Rundungsradius ausgebildet sind. Die beiden Rechteckrahmen 3, 4 sind vorzugsweise durch ein innen hohles Hohlprofil mit einem zum Beispiel runden oder rechteckförmigen Querschnitt ausgebildet, was wesentlich zu einem gewichtsgünstigen Aufbau beiträgt. Beispielsweise und besonders bevorzugt sind die vorderen und hinteren Rechteckrahmen 4, 5 aus einem Leichtmetall, zum Beispiel aus Aluminium oder aus einer Aluminiumlegierung, hergestellt. Die jeweils gewünschte konkrete Rechteckrahmenform kann zum Beispiel durch Biegen eines entsprechenden Rohr- bzw. Hohlprofils hergestellt werden, wobei die dann aneinander angrenzenden freien Enden miteinander zum Beispiel stoffschlüssig verbunden werden können.

Wie dies weiter aus der Fig. 1 ersichtlich ist, sind die beiden Rechteckrahmen 3, 4 an ihren quer zur Einschubrichtung liegenden, gegenüberliegenden Rahmenseiten 9, 10 jeweils mittels mehrerer in Hochachsenrichtung z gesehen etagenartig übereinanderliegender dünner bzw. stabartiger Verbindungsstreben 11a bis 11g, die jeweils die Seitenteile 11 des Hordengestells 1 ausbilden, miteinander verbunden und bilden einen in sich steifen und stabilen Rahmenverbund als Hordengestell 1 aus.

Auf jeder der gegenüberliegenden Rahmenseiten 9, 10 bildet hier beispielhaft jeweils eine unterste der Verbindungsstreben 11a eine, in Einschubrichtung 2 verlaufende Radlagerachse aus, an der hier lediglich beispielhaft zwei, in Einschubeinrichtung 2 voneinander beabstandete, und bevorzugt im unmittelbaren Nahbereich der Vertikalstreben 5, 6 angeordnete, Räder 12 drehbar gelagert sind.

Diese Räder sind aus einem hochtemperaturbeständigen Kunststoffmaterial, insbesondere aus einem hochtemperaturbeständigen thermoplastischen Kunststoffmaterial hergestellt, zum Beispiel aus einem Polyaryletherketon (PEAK), insbesondere einem Polyetheretherkethon (PEEK), hergestellt, und weisen ein geringeres, insbesondere deutlich geringeres, Gewicht auf als aus einem Stahlmaterial hergestellte ähnliche bzw. identische Bauteile.

Die Räder 12 sind ferner beispielsweise mittels einer Rast- und/oder Klippverbindung 13, die hier nicht im Detail dargestellt ist, lösbar und positionsgenau an den untersten Verbindungsstreben 11a gehaltert. Damit können diese einfachst ausgetauscht werden.

Die restlichen Verbindungsstreben 11b bis 11g jeder Rahmenseite 9, 10 sind hier bevorzugt durch z.B. dünne bzw. drahtartig ausgebildete, U-förmige Bügel gebildet, die mit ihrer U-Basis 14 von der jeweiligen Rahmenseite 9, 10 weg nach innen zur Hordengestellmitte abragen und die mit ihren Schenkelenden 15 jeweils im Bereich der zugeordneten Vertikalstreben 5, 6 des vorderen und hinteren Rechteckrahmens 3, 4 angebunden sind. Die Anbindung der Schenkelenden 15 erfolgt hier beispielhaft mittelbar über zwei den Vertikalstreben 5, 6 zugeordnete Stabelemente 16, 17, so dass die U-förmigen Bügel bzw. die Verbindungsstreben 11b bis 11g mitsamt den beiden Stabelementen 16, 17 jeweils ein separat handhabbares gitterartiges Bauteil bzw. Seitenteil 11 ausbilden, das mittels der Stabelemente 16, 17 an den jeweils zugeordneten Vertikalstreben 5, 6 der Rechteckrahmen 3, 4 einfachst festlegbar ist, zum Beispiel lösbar festgelegt ist, zum Beispiel mittels einer Schraubverbindung, oder aber auch unlösbar festgelegt sein kann, zum Beispiel stoffschlüssig (zum Beispiel angehaftet mittels einzelner Schweiß- oder Lötpunkte) oder durch Nieten festgelegt sein kann. Alternativ dazu können die Schenkelenden 15 aber selbstverständlich auch direkt, d.h. ohne die Stabelemente 16 und 17 an den jeweils zugeordneten Vertikalstreben 5, 6 der Rechteckrahmen 3, 4 festgelegt werden, was aber hier nicht weiter dargestellt ist

Wie aus der Fig. 1 weiter beispielhaft ersichtlich ist, weisen die U-förmigen Bügel bevorzugt einen zylindrischen oder runden Querschnitt auf.

Neben den Rädern 12 können gegebenenfalls auch noch weitere Bauteile bzw. Bestandteile des Hordengestells 11 aus einem hochtemperaturbeständigen Kunststoff hergestellt sein, zum Beispiel die Verbindungsstreben 11b bis 11g. Alternativ können diese jedoch auch aus einem Stahl- bzw. Edelstahlmaterial, zum Beispiel einem Stahl- bzw. Edelstahldraht hergestellt sein, der dann in die gewünschte U-Form gebogen wird.

Auch die Rechteckrahmen 3, 4 und/oder die unterste Verbindungsstrebe 11a könnten zum Beispiel aus einem derartigen hochtemperaturbeständigen Kunststoff hergestellt sein. Aufgrund der insgesamt gewichtsgünstigen Bauweise können diese Rechteckrahmen 3, 4, insbesondere im Falle von Hohlprofilen, aber auch aus einem Stahlmaterial, zum Beispiel aus Edelstahl, hergestellt sein, oder aber auch, wie bereits zuvor ausgeführt aus einem Leichtmetall. Des Weiteren könnte auch die unterste Verbindungsstrebe 11a zum Beispiel aus Stahl hergestellt sein, wenngleich jedoch deren Herstellung als Hohlprofil und/oder aus einem Leichtmetall, zum Beispiel aus Aluminium oder einer Aluminiumlegierung, bevorzugt ist.

Wie aus der Fig. 1 weiter sehr gut ersichtlich ist, ergibt sich damit ein insgesamt steifer, jedoch sehr gewichtsgünstiger Aufbau eines Hordengestells 1, mittels dem die thermische Aufheizmasse und damit die Energiekosten in Verbindung mit dessen Einsatz in einem Backofen erheblich reduziert werden kann bzw. können. Des Weiteren ist ein derartiges Hordengestell 1 wesentlich einfacher handhabbar als ein Hordengestell mit einem massiven Stahl-Kastenaufbau.

Wie in der Fig. 1 lediglich strichliert dargestellt, könnte gegebenenfalls an dem in Hochachsenrichtung z oberen Ende jeder Rahmenseite 9, 10 optional auch noch eine weitere Verbindungsstrebe 11h angeordnet sein, die direkt und unmittelbar mit den Vertikalstreben 5, 6 der Rechteckrahmen 3, 4 verbunden ist und die kein Backblech-Auflager ausbildet. Diese optionale oberste Verbindungsstrebe 11h kann zum Beispiel entsprechend der untersten Verbindungsstrebe 11a gestaltet sein und zum Beispiel aus Leichtmetall hergestellt sein und/oder durch ein Hohlprofil gebildet sein. Alternativ dazu könnte diese optionale Verbindungsstrebe 11h aber auch aus einem hochtemperaturbeständigen Kunststoffmaterial hergestellt sein.

In der Fig. 1 ist zudem schematisch und strichliert in Verbindung mit dem vorderen Rechteckrahmen 3 gezeigt, dass dort, zum Beispiel in einem, bezogen auf die Querrichtung mittleren Bereich eine Anschlagstrebe 18 vorgesehen ist, die bevorzugt sowohl an der oberen als auch an der unteren Horizontalstrebe 7, 8 des vorderen Rechteckrahmens 3 angebunden ist. Diese Anschlagstrebe 18 dient vorteilhaft zum einen als Anschlag für die in das Hordengestell 1 eingeschobenen und hier nicht dargestellten Backbleche, so dass diese von der mit einem strichlierten Pfeil 19 dargestellten Backblech-Einschubrichtung her nicht aus dem Hordengestell 1 ausgeschoben werden können. Zum anderen dient diese Anschlagstrebe 18 vorteilhafterweise auch als Auszugshilfe aus dem Backofen. Hierzu kann an der Anschlagstrebe 18, was hier aber nicht dargestellt ist, zum Beispiel ein Werkzeugangriffsbereich und/oder -element, zum Beispiel eine kerbartige Ausnehmung oder dergleichen, angeordnet sein, an welchem Werkzeugangriffsbereich und/oder Werkzeugangriffselement ein Ausziehwerkzeug angesetzt und so fixiert werden kann, dass das Hordengestell 1 dann in einer der Einschubrichtung 2 entgegengesetzten Auszugrichtung aus dem Backofen herausgezogen werden kann. Diese Anschlagstrebe 18 kann aus jedem der vorstehend genannten Materialien hergestellt sein.

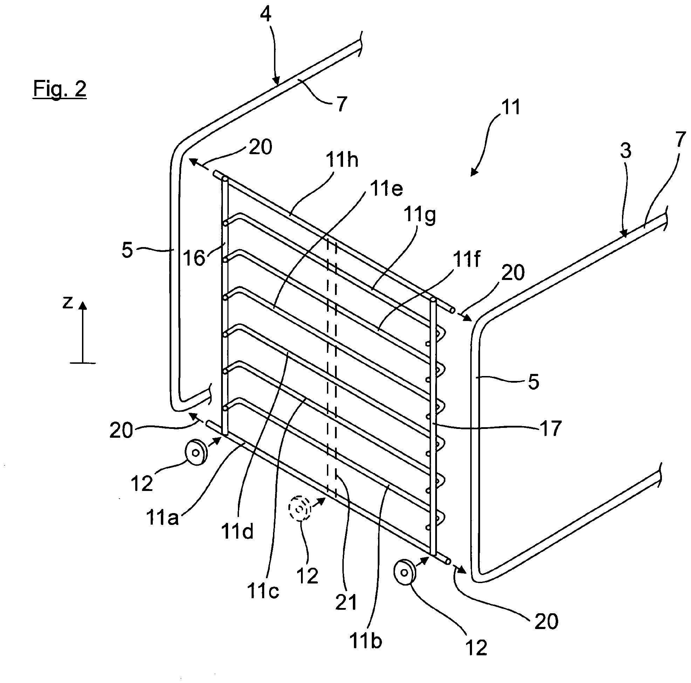

In der Fig. 2 ist lediglich schematisch und teilweise eine Abwandlung der in der Fig. 1 dargestellten Ausführungsform gezeigt, bei der die Seitenteile 11 (in der Fig. 2 ist nur eines der beiden gegenüberliegenden Seitenteile 11 gezeigt) im Grunde ähnlich aufgebaut sind wie in der Fig. 1, das heißt, dass die die Auflager ausbildenden U-förmigen Bügel bzw. Verbindungsstreben 11b bis 11g hier wieder analog zur Ausführungsform gemäß Fig. 1 mit ihren Schenkelenden 15 an den zwei, den Vertikalstreben 5, 6 zugeordneten Stabelementen 16, 17 angebunden sind. Im Unterschied zur Ausführungsform gemäß Fig. 1 sind die beiden Stabelemente 16, 17 jetzt jedoch mit ihren freien Enden nicht am Rechteckrahmen 3, 4 direkt angebunden, sondern jeweils an den in Vertikalrichtung z gesehen beabstandeten, hier lediglich beispielhaft oberhalb und unterhalb der U-förmigen Bügel 11b bis 11g angeordneten, Verbindungsstreben 11a und 11h festgelegt und angebunden, zum Beispiel stoffschlüssig angebunden, um nur ein Beispiel zu nennen. Die Anbindung derartig aufgebauter, vorzugsweise separat handhabbarer Seitenteile 11 an den beiden Rechteckrahmen 3, 4 erfolgt dann, wie in der Fig. 2, die den nicht montierten Zustand zeigt, entsprechend der Pfeile 20 über die Verbindungsstreben 11a und 11h, das heißt mit anderen Worten, dass die jeweils freien Enden der beiden Verbindungsstreben 11a und 11h hier dann an den jeweils zugeordneten Rechteckrahmen 3 bzw. 4, zum Beispiel, aber nicht notwendigerweise, im Bereich der Vertikalstreben 5, 6 der Rechteckrahmen 3, 4, angebunden bzw. festgelegt werden.

Im Anbindungsbereich der beiden Stabelemente 16, 17 an der unteren Verbindungsstrebe 11a ist jeweils ein Rad 12 aufgeclipst, wobei dieser Anbindungsbereich der Stabelemente 16, 17 an der Verbindungsstrebe 11a dazu ausgenutzt wird, die aufgeclipsten Räder auch bezüglich deren Verschiebung bzw. Verlagerung in Strebenlängsrichtung zu fixieren. Das heißt, dass hier beispielsweise Clipverbindungen vorgesehen sind, die zum einen die Verbindungsstrebe 11a oben und unten und zum anderen auch die Stabelemente 16, 17 links und rechts umgreifen bzw. hintergreifen.

Wie in der Fig. 2 weiter strichliert eingezeichnet, kann ferner in einem mittleren Bereich zwischen den beiden Stabelementen 16, 17 ein drittes Stabelement 21 vorgesehen sein, das mit seinen freien Enden wieder analog der beiden anderen Stabelemente 16, 17 an den gegenüberliegenden Verbindungsstreben 11a und 11h angebunden sein kann, und zwar in einer Weise, wie zuvor in Verbindung mit den beiden Stabelementen 16, 17 beschrieben. Ebenso kann dieses dritte Stabelement 21 entsprechend der beiden anderen Stabelemente 16, 17 hergestellt und/oder ausgebildet sein. Im Anbindungsbereich des dritten Stabelementes 21 an der unteren Verbindungsstrebe 11a kann beispielsweise in der zuvor beschriebenen Art und Weise ein weiteres Rad 12 angeordnet werden, was aber nicht zwingend notwendig ist. Dieses dritte Stabelement 21 kann, insbesondere in Verbindung mit relativ lang bauenden Seitenteilen eine weitere Stabilisierung dieser Seitenteile 11 und damit des Hordengestells 1 bewirken. Es versteht sich, dass selbstverständlich nicht nur lediglich ein drittes Stabelement 21 vorgesehen sein kann, sondern auch noch weitere Stabelemente vorgesehen werden können, auch wenn dies hier nicht mehr explizit gezeigt ist.

### Bezugszeichenliste

- 1: Hordengestell
- 2: Einschubrichtung
- 3: vorderer Rechteckrahmen
- 4: hinterer Rechteckrahmen
- 5: Vertikalstreben
- 6: Vertikalstreben
- 7: Horizontalstrebe
- 8: Horizontalstrebe
- 9: Rahmenseite
- 10: Rahmenseite
- 11: Seitenteil
- 11a bis 11h: Verbindungsstreben
- 12: Räder
- 13: Rast- und/oder Klippverbindung
- 14: U-Basis
- 15: Schenkelenden
- 16: Stabelement
- 17: Stabelement
- 18: Anschlagstrebe
- 19: Backblech-Einschubrichtung
- 20: Montagepfeile
- 21: Stabelement

## Patentansprüche

1. Mittels Rädern verfahrbares Hordengestell für einen, eine Backkammer aufweisenden Backofen, wobei die Räder (12) des Hordengestells (1) aus einem hochtemperaturbeständigen Kunststoffmaterial hergestellt sind, und wobei das Hordengestell (1) einen, in Einschubrichtung gesehen, vorderen Rahmen (4) sowie einen beabstandet dahinter liegenden hinteren Rahmen (3) aufweist, die an ihren, quer zur Einschubrichtung (2) ausgerichteten, gegenüberliegenden Rahmenseiten (9, 10) jeweils mittels mehrerer in Hochachsenrichtung (z) gesehen etagenartig übereinander liegender, stabartig ausgebildeter und ein Hordengestell-Seitenteil (11) ausbildender, Verbindungsstreben (11a bis 11g) verbunden sind, **dadurch gekennzeichnet, dass** auf jeder der gegenüberliegenden Rahmenseiten (9, 10) an einer in Hochachsenrichtung (z) unteren der stabartigen Verbindungsstrebe (11a) jeweils wenigstens ein Rad (12) angeordnet ist.

2. Hordengestell nach Anspruch 1, **dadurch gekennzeichnet, dass** der hochtemperaturbeständige Kunststoff ein hochtemperaturbeständiger thermoplastischer Kunststoff ist.

3. Hordengestell nach Anspruch 2, **dadurch gekennzeichnet, dass** der hochtemperaturbeständige thermoplastische Kunststoff ein Polyaryletherketon (PAEK), insbesondere ein Polyetheretherketon (PEEK), ist.

4. Hordengestell nach einem der vorhergehenden Ansprüche, **dadurch gekennzeichnet, dass** auf jeder der gegenüberliegenden Rahmenseiten (9, 10) an einer in Hochachsenrichtung (z) untersten Verbindungsstrebe (11a) jeweils wenigstens ein Rad (12) angeordnet ist und/oder dass auf jeder der gegenüberliegenden Rahmenseiten (9, 10) an der in Hochachsenrichtung (z) unteren Verbindungsstrebe (11a) jeweils mehrere in Einschubrichtung (11a) voneinander beabstandete Räder (12) angeordnet sind.

5. Hordengestell nach einem der vorhergehenden Ansprüche, **dadurch gekennzeichnet, dass** die Räder (12) an den Verbindungsstreben (11a) lösbar festgelegt sind, insbesondere mittels einer Rast- und/oder Klippverbindung (13) lösbar an den Verbindungsstreben (11a) gehaltert sind.

6. Hordengestell nach einem der vorhergehenden Ansprüche, **dadurch gekennzeichnet, dass** wenigstens ein Teil der auf den gegenüberliegenden Rahmenseiten (9, 10) liegenden Verbindungsstreben (11b bis 11g) ein Auflager für ein Backblech ausbildet, wobei bevorzugt vorgesehen ist, dass pro Rahmenseite (9, 10) mehrere in Hochachsenrichtung (z) voneinander beabstandete Auflager vorgesehen sind, mittels denen mehrere Backbleche in Hochachsenrichtung (z) beabstandet voneinander etagenartig am Hordengestell (1) lagerbar sind.

7. Hordengestell nach einem der vorhergehenden Ansprüche, **dadurch gekennzeichnet, dass** die Verbindungsstreben (11a bis 11g) Bestandteil eines, vorzugsweise separat handhabbaren und/oder im montierten Zustand eine Hordengestellseite ausbildenden, Seitenteils (11) des Hordengestells (1) sind, wobei bevorzugt vorgesehen ist, dass quer zur Einschubrichtung (2) gesehen auf gegenüberliegenden Hordengestellseiten liegende Seitenteile (11), mittelbar und/oder unmittelbar mit den Rahmen, insbesondere den Rechteckrahmen (3, 4), verbunden sind.

8. Hordengestell nach Anspruch 7, **dadurch gekennzeichnet, dass** das Seitenteil (11) wenigstens ein Positionier- und/oder Halteelement aufweist, mittels dem die Verbindungsstreben (11a bis 11h) des Seitenteils (11) in ihrer jeweiligen Position gehalten sind, wobei bevorzugt vorgesehen ist, dass das wenigstens eine Positionier- und/oder Halteelement stabförmig ausgebildet ist und/oder in Vertikalrichtung verläuft, höchst bevorzugt das Positionier- und/oder Halteelement durch ein Stabelement (16, 17, 21) gebildet ist.

9. Hordengestell nach einem der Ansprüche 6 bis 8, **dadurch gekennzeichnet, dass** die, die Auflager ausbildenden Verbindungsstreben (11b bis 11g) durch, vorzugsweise einen zylindrischen oder runden Querschnitt aufweisende, U-förmige Bügel gebildet sind, die mit ihrer U-Basis (14) von der jeweiligen Rahmenseite (9, 10) weg nach innen zur Hordengestellmitte abragen und die mit ihren Schenkeln, vorzugsweise mit ihren Schenkelenden (15), jeweils mittelbar und/oder unmittelbar an einer zugeordneten Vertikalstrebe (5, 6) des vorderen und hinteren Rahmens, insbesondere eines vorderen und hinteren Rechteckrahmens (3, 4), angebunden sind.

10. Hordengestell nach Anspruch 9, **dadurch gekennzeichnet, dass** die U-förmigen Bügel mit ihren, einer Vertikalstrebe (5, 6) des hinteren Rahmens, insbesondere eines hinteren Rechteckrahmens (4), zugeordneten Schenkeln, vorzugsweise mit den freien Schenkelenden (15), an einem, ein Positionier- und/oder Halteelement ausbildenden ersten Stabelement (16) und mit ihren, einer Vertikalstrebe des vorderen Rahmens, insbesondere eines vorderen Rechteckrahmens (3), zugeordneten Schenkeln, vorzugsweise mit den freien Schenkelnden (15), an einem zweiten, ein Positionier- und/oder Halteelement ausbildenden, Stabelement (17) angebunden sind.

11. Hordengestell nach Anspruch 10, **dadurch gekennzeichnet, dass** die U-förmigen Bügel mitsamt dem ersten und dem zweiten Stabelement (16, 17) ein, vorzugsweise separat handhabbares, Seitenteil (11) ausbilden, das mittels der Stabelemente (16, 17) mittelbar und/oder unmittelbar an den Rahmen festlegbar ist, vorzugsweise an den jeweils zugeordneten Vertikalstreben (5, 6) der Rahmen, insbesondere Rechteckrahmen (3, 4), festlegbar ist.

12. Hordengestell nach Anspruch 10, **dadurch gekennzeichnet, dass** das erste und zweite Stabelement (16, 17) an wenigstens einer, kein Auflager ausbildenden Verbindungsstrebe (11a, 11h) festgelegt ist, vorzugsweise an wenigstens zwei in Vertikalrichtung (z) beabstandeten Verbindungsstreben (11a, 11h) festgelegt ist, wobei die wenigstens eine Verbindungsstrebe (11a, 11h) mitsamt dem ersten und zweiten Stabelement (16, 17) sowie den U-förmigen Bügeln ein, vorzugsweise separat handhabbares, Seitenteil (11) ausbildet, das mittels der wenigstens einen Verbindungsstrebe (11a, 11h) mittelbar und/oder unmittelbar an den Rahmen festlegbar ist, vorzugsweise an den jeweils zugeordneten Vertikalstreben (5, 6) der Rahmen, insbesondere Rechteckrahmen (3, 4), festlegbar ist.

13. Hordengestell nach einem der Ansprüche 9 bis 12, **dadurch gekennzeichnet, dass** die U-förmigen Bügel, gegebenenfalls mitsamt den zugeordneten Stabelementen (16, 17), aus dem hochtemperaturbeständigen Kunststoffmaterial oder aus einem Stahlmaterial, bevorzugt aus einem Stahldraht oder Stahlrohr, höchst bevorzugt aus einem Edelstahldraht oder -rohr, hergestellt sind.

14. Hordengestell nach einem der vorhergehenden Ansprüche, **dadurch gekennzeichnet, dass** der vordere Rahmen (4) ein vorderer Rechteckrahmen und der hintere Rahmen (3) ein hinterer Rechteckrahmen ist.

15. Hordengestell nach einem der vorhergehenden Ansprüche, **dadurch gekennzeichnet, dass** der vordere Rahmen (4) und der hintere Rahmen (3) und/oder diejenigen Verbindungsstreben, die kein Backblech-Auflager ausbilden, aus dem hochtemperaturbeständigen Kunststoffmaterial oder aus einem Leichtmetall, insbesondere aus Aluminium oder aus einer Aluminiumlegierung, hergestellt sind.

16. Hordengestell nach einem der vorhergehenden Ansprüche, **dadurch gekennzeichnet, dass** der vordere Rahmen (4) und der hintere Rahmen (3) und/oder die Verbindungsstreben, insbesondere die kein Backblech-Auflager ausbildenden Verbindungsstreben, durch ein Hohlprofil gebildet sind.

17. Backofen mit einer Backkammer sowie mit einem in die Backkammer einfahrbaren Hordengestell (1) nach einem der vorhergehenden Ansprüche.

## Claims

1. Tray-type rack for a baking oven having a baking chamber, which rack is able to be moved by means of wheels, wherein the wheels (12) of the tray-type rack (1) are produced from a high temperature-resistant plastic material, and wherein the tray-type rack (1) has, as viewed in the insertion direction, a front frame (4) and, situated therebehind so as to be spaced apart, a rear frame (3), which frames are connected on their opposite frame sides (9, 10), oriented transversely with respect to the insertion direction (2), in each case by means of multiple connecting struts (11a to 11g) which are situated one above the other on different levels as viewed in the vertical axis direction (z), are of rod-like form and form a tray-type frame side part (11), **characterized in that**, on each of the opposite frame sides (9, 10), in each case at least one wheel (12) is arranged on a lower strut (11a), as viewed in the vertical axis direction (z), of the rod-like connecting struts.

2. Tray-type frame according to Claim 1, **characterized in that** the high temperature-resistant plastic is a high temperature-resistant thermoplastic.

3. Tray-type frame according to Claim 2, **characterized in that** the high temperature-resistant thermoplastic is a polyaryl ether ketone (PAEK), in particular a polyether ether ketone (PEEK).

4. Tray-type frame according to one of the preceding claims, **characterized in that**, on each of the opposite frame sides (9, 10), in each case at least one wheel (12) is arranged on a lowermost connecting strut (11a) as viewed in the vertical axis direction (z), and/or in that, on each of the opposite frame sides (9, 10), in each case multiple wheels (12), which are spaced apart from one another in the insertion direction (11a), are arranged on the lower connecting strut (11a) as viewed in the vertical axis direction (z).

5. Tray-type frame according to one of the preceding claims, **characterized in that** the wheels (12) are fixed in a detachable manner to the connecting struts (11a), in particular are held in a detachable manner on the connecting struts (11a) by means of a detent and/or clip-type connection (13).

6. Tray-type frame according to one of the preceding claims, **characterized in that** at least some of the connecting struts (11b to 11g) situated on the opposite frame sides (9, 10) form a support for a baking sheet, wherein it is preferably provided that, per frame side (9, 10), there are provided multiple supports which are spaced apart from one another in the vertical axis direction (z) and by means of which multiple baking sheets are able to be mounted on the tray-type frame (1) spaced apart from one another on different levels as viewed in the vertical axis direction (z).

7. Tray-type frame according to one of the preceding claims, **characterized in that** the connecting struts (11a to 11g) are constituent parts of a side part (11) of the tray-type frame (1), which side part preferably is able to be handled separately and/or forms a tray-type frame side in the assembled state, wherein it is preferably provided that side parts (11) situated on opposite tray-type frame sides as viewed transversely with respect to the insertion direction (2) are connected directly and/or indirectly to the frames, in particular to the rectangular frames (3, 4).

8. Tray-type frame according to Claim 7, **characterized in that** the side part (11) has at least one positioning and/or holding element, by means of which the connecting struts (11a to 11h) of the side part (11) are held in their respective position, wherein it is preferably provided that the at least one positioning and/or holding element is of rod-like form and/or extends in the vertical direction, most preferably the positioning and/or holding element is formed by a rod element (16, 17, 21).

9. Tray-type frame according to one of Claims 6 to 8, **characterized in that** the connecting struts (11b to 11g) forming the supports are formed by U-shaped brackets which preferably have a cylindrical or round cross section and which, with their U base (14), project away from the respective frame side (9, 10) inwardly towards the tray-type frame centre and which, with their limbs, preferably with their limb ends (15), are each attached directly and/or indirectly to an associated vertical strut (5, 6) of the front and rear frame (3, 4), in particular of a front and rear rectangular frame (3, 4).

10. Tray-type frame according to Claim 9, **characterized in that** the U-shaped brackets are, with their limbs which are associated with a vertical strut (5, 6) of the rear frame, in particular of a rear rectangular frame (4), preferably with the free limb ends (15), attached to a first rod element (16) which forms a positioning and/or holding element, and are, with their limbs which are associated with a vertical strut of the front frame, in particular of a front rectangular frame (3), preferably with the free limb ends (15), attached to a second rod element (17) which forms a positioning and/or holding element.

11. Tray-type frame according to Claim 10, **characterized in that** the U-shaped brackets together with the first and the second rod element (16, 17) form a side part (11) which is preferably able to be handled separately and which, by means of the rod elements (16, 17), is able to be fixed directly and/or indirectly to the frames, preferably to the in each case associated vertical struts (5, 6) of the frames, in particular rectangular frames (3, 4).

12. Tray-type frame according to Claim 10, **characterized in that** the first and the second rod element (16, 17) is fixed to at least one connecting strut (11a, 11h) which does not form a support, preferably fixed to at least two connecting struts (11a, 11h) which are spaced apart in the vertical direction (z), wherein the at least one connecting strut (11a, 11h) together with the first and second rod element (16, 17) and the U-shaped brackets forms a side part (11) which is preferably able to be handled separately and which, by means of the at least one connecting strut (11a, 11h), is able to be fixed directly and/or indirectly to the frames, preferably to the in each case associated vertical struts (5, 6) of the frames, in particular rectangular frames (3, 4).

13. Tray-type frame according to one of Claims 9 to 12, **characterized in that** the U-shaped brackets, if appropriate together with the associated rod elements (16, 17), are produced from the high temperature-resistant plastic material or from a steel material, preferably from a steel wire or steel tube, most preferably from a high-grade steel wire or tube.

14. Tray-type frame according to one of the preceding claims, **characterized in that** the front frame (4) is a front rectangular frame, and the rear frame (3) is a rear rectangular frame.

15. Tray-type frame according to one of the preceding claims, **characterized in that** the front frame (4) and the rear frame (3) and/or those connecting struts which do not form baking sheet supports are produced from the high temperature-resistant plastic material or from a light metal, in particular from aluminium or from an aluminium alloy.

16. Tray-type frame according to one of the preceding claims, **characterized in that** the front frame (4) and the rear frame (3) and/or the connecting struts, in particular the connecting struts which do not form baking sheet supports, are formed by a hollow profile.

17. Baking oven having a baking chamber and having a tray-type frame (1) according to one of the preceding claims which is able to be moved into the baking chamber.

## Revendications

1. Support de claies déplaçable au moyen de roues pour un four de cuisson présentant une chambre de cuisson, dans lequel les roues (12) du support de claies (1) sont fabriquées en une matière plastique résistant à haute température, et dans lequel le support de claies (1) présente un cadre avant (4), vu dans la direction d'introduction, ainsi qu'un cadre arrière (3) disposé à distance derrière celui-ci, qui sont assemblés sur leurs côtés de cadre opposés (9, 10) orientés transversalement à la direction d'introduction (2), respectivement au moyen de plusieurs entretoises d'assemblage (11a à 11g) situées l'une au-dessus de l'autre à la manière d'étages, vues dans la direction d'un axe vertical (z), configurées en forme de barres et formant une partie latérale (11) du support de claies, **caractérisé en ce que** chaque fois au moins une roue (12) est disposée sur chacun des côtés de cadre opposés (9, 10) sur une entretoise inférieure (11a), vue dans la direction de l'axe vertical (z), des entretoises d'assemblage en forme de barre.

2. Support de claies selon la revendication 1, **caractérisé en ce que** la matière plastique résistant à haute température est une matière plastique thermoplastique résistant à haute température.

3. Support de claies selon la revendication 2, **caractérisé en ce que** la matière plastique résistant à haute température est un polyéthercétone (PAEK), en particulier un polyétheréthercétone (PEEK).

4. Support de claies selon l'une quelconque des revendications précédentes, **caractérisé en ce que** chaque fois au moins une roue (12) est disposée sur chacun des côtés de cadre opposés (9, 10) sur une entretoise d'assemblage la plus inférieure (11a) dans la direction d'un axe vertical (z) et/ou **en ce que** chaque fois plusieurs roues (12) sont disposées à distance l'une de l'autre dans la direction d'introduction (11a) sur l'entretoise d'assemblage inférieure (11a) dans la direction de l'axe vertical (z).

5. Support de claies selon l'une quelconque des revendications précédentes, **caractérisé en ce que** les roues (12) sont attachées de façon séparable aux entretoises d'assemblage (11a), en particulier sont maintenues de façon séparable sur les entretoises d'assemblage (11a) au moyen d'un assemblage par encliquetage et/ou par pinçage.

6. Support de claies selon l'une quelconque des revendications précédentes, **caractérisé en ce qu'**au moins une partie des entretoises d'assemblage (11b à 11g) situées sur les côtés de cadre opposés (9, 10) forment une barre d'appui pour une tôle de cuisson, dans lequel il est de préférence prévu qu'il soit prévu par côté de cadre (9, 10) plusieurs barres d'appui espacées l'une de l'autre dans la direction de l'axe vertical (z), au moyen desquelles plusieurs tôles de cuisson peuvent être placées à distance l'une de l'autre dans la direction de l'axe vertical (z) à la manière d'étages sur le support de claies (1).

7. Support de claies selon l'une quelconque des revendications précédentes, **caractérisé en ce que** les entretoises d'assemblage (11a à 11g) sont des composants d'une partie latérale (11) du support de claies (1) de préférence manipulable séparément et/ou formant à l'état monté un côté de support de claies, dans lequel il est de préférence prévu que, vues transversalement à la direction d'introduction (2), des parties latérales (11) situées sur des côtés de support de claies opposés soient assemblées indirectement et/ou directement aux cadres, en particulier aux cadres rectangulaires (3, 4).

8. Support de claies selon la revendication 7, **caractérisé en ce que** la partie latérale (11) présente au moins un élément de positionnement et/ou de maintien, au moyen duquel les entretoises d'assemblage (11a à 11h) de la partie latérale (11) sont maintenues dans leur position respective, dans lequel il est de préférence prévu que ledit au moins un élément de positionnement et/ou de maintien soit réalisé en forme de barre et/ou s'étende en direction verticale, et de préférence encore que l'élément de positionnement et/ou de maintien soit formé par un élément de barre (16, 17, 21).

9. Support de claies selon l'une quelconque des revendications 6 à 8, **caractérisé en ce que** les entretoises d'assemblage (11b à 11g) formant les barres d'appui sont formées par des étriers en forme de U, qui présentent de préférence une section transversale cylindrique ou ronde, qui font saillie avec leur base de U (14) à partir du côté de cadre respectif (9, 10) vers l'intérieur en direction du milieu du support de claies et qui sont attachés par leurs branches, de préférence par leurs extrémités de branche (15), chaque fois indirectement et/ou directement à une entretoise verticale associée (5, 6) du cadre avant et arrière, en particulier d'un cadre avant et arrière rectangulaire (3, 4).

10. Support de claies selon la revendication 9, **caractérisé en ce que** les étriers en forme de U sont attachés avec leurs branches associées à une entretoise verticale (5, 6) du cadre arrière, en particulier d'un cadre arrière rectangulaire (4), de préférence avec les extrémités de branche libres (15), à un premier élément de barre (16) formant un élément de positionnement et/ou de maintien et avec leurs branches, de préférence avec les extrémités de branche libres (15), associées à une entretoise verticale du cadre avant, en particulier d'un cadre avant rectangulaire (3), à un deuxième élément de barre (17) formant un élément de positionnement et/ou de maintien.

11. Support de claies selon la revendication 10, **caractérisé en ce que** les étriers en forme de U de concert avec le premier et le deuxième élément de barre (16, 17) forment une partie latérale (11), de préférence manipulable séparément, qui peut être fixée indirectement au moyen des éléments de barre (16, 17) et/ou directement au cadre, de préférence aux entretoises verticales respectivement associées (5, 6) des cadres, en particulier des cadres rectangulaires (3, 4).

12. Support de claies selon la revendication 10, **caractérisé en ce que** le premier et le deuxième élément de barre (16, 17) sont fixés à au moins une entretoise d'assemblage (11a, 11h) ne formant pas de barre d'appui, de préférence à au moins deux entretoises d'assemblage (11a, 11 h) espacées en direction verticale (z), dans lequel ladite au moins une entretoise d'assemblage (11a, 11h) de concert avec le premier et le deuxième élément de barre (16, 17) ainsi que les étriers en forme de U forme une partie latérale (11), de préférence manipulable séparément, qui peut être fixée indirectement au moyen de ladite au moins une entretoise d'assemblage (11a, 11h) et/ou directement au cadre, de préférence aux entretoises verticales respectivement associées (5, 6) des cadres, en particulier des cadres rectangulaires (3, 4).

13. Support de claies selon l'une quelconque des revendications 9 à 12, **caractérisé en ce que** les étriers en forme de U, éventuellement de concert avec les éléments de barre associés (16, 17) sont fabriqués avec la matière plastique résistant à haute température ou en un matériau d'acier, de préférence en un fil d'acier ou un tube d'acier, de préférence encore en un fil ou un tube d'acier allié.

14. Support de claies selon l'une quelconque des revendications précédentes, **caractérisé en ce que** le cadre avant (4) est un cadre rectangulaire avant et le cadre arrière (3) est un cadre rectangulaire arrière.

15. Support de claies selon l'une quelconque des revendications précédentes, **caractérisé en ce que** le cadre avant (4) et le cadre arrière (3) et/ou les entretoises d'assemblage, qui ne forment pas de barre d'appui de tôle de cuisson, sont fabriqués/fabriquées avec la matière plastique résistant à haute température ou en un métal léger, en particulier en aluminium ou en un alliage d'aluminium.

16. Support de claies selon l'une quelconque des revendications précédentes, **caractérisé en ce que** le cadre avant (4) et le cadre arrière (3) et/ou les entretoises d'assemblage, en particulier les entretoises d'assemblage qui ne forment pas de barre d'appui de tôle de cuisson, sont formés/formées par un profilé creux.

17. Four de cuisson avec une chambre de cuisson ainsi qu'avec un support de claies (1) selon l'une quelconque des revendications précédentes pouvant être introduit dans la chambre de cuisson.
